# EUROPEAN PATENT APPLICATION

(11) **EP 2 063 585 A1**
(43) Date of publication of application: **27.05.2009**
(21) Application number: 07301569.5
(22) Date of filing: 22.11.2007
(51) Int. Cl.: H04L 12/56

(54) **Method and apparatus for computing a path in a network**

(71) Applicant: Alcatel Lucent, 75008 Paris (FR)
(72) Inventor: Lahoud, Samer, 35510 Cesson-Sévigné (FR); Douville, Richard, 91310, LONGPONT SUR ORGE (FR)
(74) Representative: Urlichs, Stefan

(57) **Abstract**

A Path Computation Client (PCC1) provides a request (REQ) to a Path Computing Element (PCE1). The request (REQ) specifies the end points (N1, N2) of the path (P) to be established, a set of constraints to satisfy and, at least one processing rule for at least part of said constraints. The Path Computing Element (PCE1) processes the request to determine a path (P) that satisfies the constraints using the processing rule.

## Description

### Field of the Invention

The present invention relates to the field of telecommunications and more particularly to a method of computing a path in a network upon request from a Path Computing Client and a related Path Computing Element.

### Background of the Invention

Constraint-based path computation is a fundamental building block for traffic engineering systems such as Multiprotocol Label Switching (MPLS) and Generalized Multiprotocol Label Switching (GMPLS) networks. Path computation in large, multi-domain, multi-region, or multi-layer networks is complex and may require special computational components and cooperation between the different network domains. IETF standard RFC 4655, which is incorporated by reference herein, specifies an architecture for a Path Computation Element (PCE)-based model to address this problem space.

A Path Computation Element (PCE) is a network component that is capable of performing path computations at the request of Path Computation Clients (PCCs). The PCE is applied in Multiprotocol Label Switching Traffic Engineering (MPLS-TE) networks and in Generalized MPLS (GMPLS) networks to determine the routes of Label Switched Paths (LSPs) through the network.

RFC4657 defines a protocol termed Path Computation Element Communication Protocol (PCEP) for the communication between PCEs and between PCE and PCC. It specifies that the path computation request message sent towards a PCE must support the inclusion of a set of one or more path constraints. Moreover, the requesting entity (PCC or PCE) must be allowed to select from or prefer an advertised list or minimal subset of standard objective functions and functional options. This objective function is used by the PCE to process constraints to a path computation request when it computes a path in order to select the "best" candidate paths, and corresponds to the optimization criteria used for the computation of one path, or the synchronized computation of a set of paths. Furthermore, the requesting entity should also be able to select a vendor-specific or experimental objective function or functional option. It should further be allowed to customize the function/options in use. That is, individual objective functions will often have parameters to be set in the request from PCC to PCE.

It exists hence a high diversity of constraints and objective functions, which might be difficult to handle at the PCC in the path computation process. For example, it could happen that no satisfactory path can be found by the PCE.
In such situation, when no feasible solution is found for a constrained path computation, the PCE returns an error message.

It is an object of the present invention to provide a method and related apparatus for improved computation of constrained path computation requests.

### Summary of the Invention

These and other objects that appear below are achieved by a method according to claim 1 and a Path Computing Element according to claim 8.

In particular, a Path Computation Client provides a request to a Path Computing Element. The request specifies the end points of the path to be established, a set of constraints to satisfy, and at least one processing rule for at least part of said constraints. The Path Computing Element processes the request to determine a path that satisfies the constraints using said processing rule.

This results in more efficient computation results and provides the ability to customize the processing rule for different constraints.

### Brief Description of the Drawings

Preferred embodiments of the present invention will now be described with reference to the accompanying drawings in which
- Fig. 1: shows a schematic diagram of a data network in which the present invention is applied;
- Fig. 2: shows the data network of claim 1 after a set-up of a label switched path;
- Fig. 3: shows a flow chart of the method according to the present invention;
- Fig. 4: shows a detailed schematic diagram of a Path Computing Element (PCE) in accordance with the present invention and comprised in the data network of Fig. 1; and
- Fig. 5: shows a schematic block diagram of a network element in accordance with the present invention.

### Detailed Description of the Invention

Terminology used hereinafter is as defined in IETF RFC 4657:
Path Computation Client (PCC): any client application requesting a path computation to be performed by a Path Computation Element.
Path Computation Element (PCE): an entity (component, application or network node) that is capable of computing a network path or route based on a network graph and applying computational constraints.

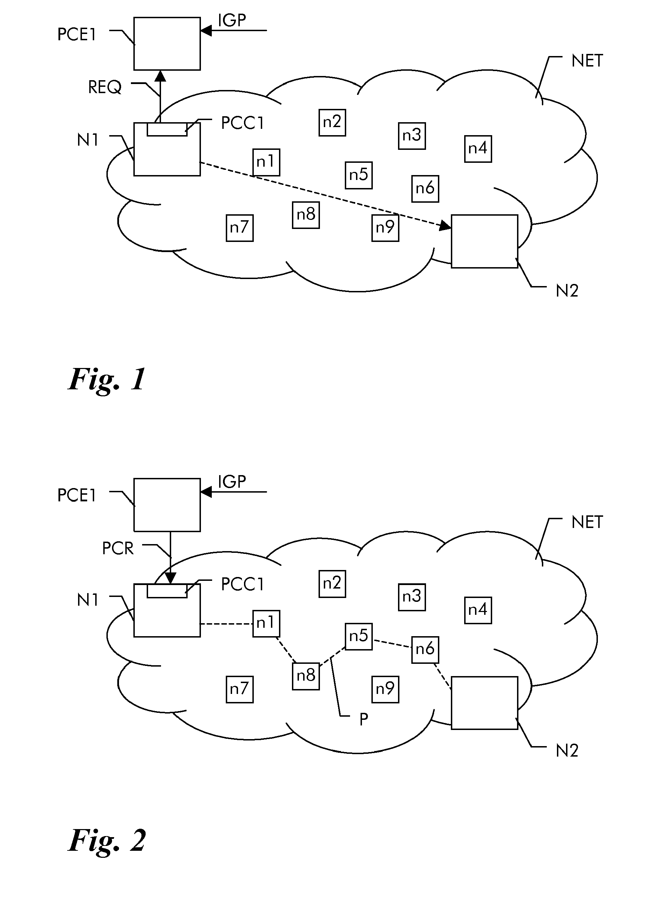

Fig. 1 shows a schematic diagram of a telecommunications network NET. It contains a first network node N1, a second network node N2 and number of intermediate network nodes n 1-n9.

In the context of the present invention telecommunications network NET can be identified with a label switched packet data network operated in accordance with the principles of Multiprotocol Label Switching (MPLS) or Generalised Multiprotocol Label Switching (GMPLS). Network paths are established as Label Switched Paths (LSPs) by means of an appropriate signaling protocol, known as such to those skilled in the art. A commonly known protocol which is appropriate in the context of the present invention is OSPF (Open Shortest Path First). OSPF uses a Link State Database (LSDB) or Traffic Engineering Database (TED) for routing purposes, wherein such database comprises information which reflect the network topology.

In accordance with RFC 4655, path computation is performed by a Path Computing Element (PCE), which is an entity, i.e., a component, an application, or a network node that is capable of computing a network path or route, based on network topology and resource information and applying computational constraints, as explained in detail in Section 3 of RFC 4655.

Such constraints can be for example bandwidth constraints, affinities inclusion/exclusion, link, node, Shared Risk Link Group (SRLG) inclusion/exclusion, maximum end-to-end IGP metric, maximum hop count, maximum end-to-end TE metric, degree of paths disjointness, MPLS-TE specific constraints such as Class-type, local, node and bandwidth protection; or GMPLS specific constraints such as switching type, encoding type, link protection type.

Network node N1 has a Path computation client (PCC) function PCC1, which can address a Path Computing Element PCE1. PCE1 comprises a Traffic Engineering Database for path computing purposes.

Building this database and updating it in case of topology changes requires an exchange of routing information between elements of the telecommunications network NET. In accordance with the OSPF protocol, which more generally can be referred to as an Interior Gateway Protocol (IGP), the routing information are provided through flooding which occurs regularly based on an incompressible time interval in accordance with the IGP used (such as OSPF, IS-IS, RIP, or IGRP).

In figure 1, PCE1 receives network topology and resource usage information via protocol IGP from other network devices (not shown). A Traffic Engineering Database (TED) is implemented in PCE1 and the information received via IGP is used to populate this database. For path setup and resource reservation, network nodes N1, N2, and n1-n9 in figure 1 comprise respective signaling engines (not shown in Fig. 1).

Network node N1 is equipped with a Path computation client function PCC1, which can contact external Path Computation Elements. When N1 whishes to establish a path to network node N2, indicated as dashed arrow in figure 1, it sends a corresponding path computation request REQ from its PCC1 function to a PCE, which is by way of example in the present embodiment PCE1. It should be noted that in the general case, there can be more than one PCE and PCC1 can address different PCEs with requests. The choice of the addressed PCE for a particular computation request is beyond the scope of this application and can depend for example on configuration , load status of the PCEs, network knowledge of the PCEs, security choice, routing optimization algorithms available on PCEs, etc..

PCE1 computes a path P using the topology and resource information in its TED and returns the computed path in a path computation result PCR to PCC1, see figure 2. Network node N1 then established the computed path P through the network.

A path computation request REQ specifies at least the end points of the path to be established. As explained above, the path computation request can contain a set of one or more path constraints. Such constraints can include but are not limited to the requested bandwidth or resources (hops, affinities, etc.) to include/exclude. Further possible constraints are listed in chapter 5.1.16. of RFC 4657.

In accordance with the present invention, the request additionally contains at least one processing rule for at least part of said constraints. One kind of processing rules would be a preference order for the set of constraints. When no feasible solution can be found with the full set of constraints, the PCE starts relaxing the constraints in the reverse order of preference until a solution is found. Then, the PCE sends to the PCC a path that satisfies the remaining subset of constraints and indicates the relaxed constraints.

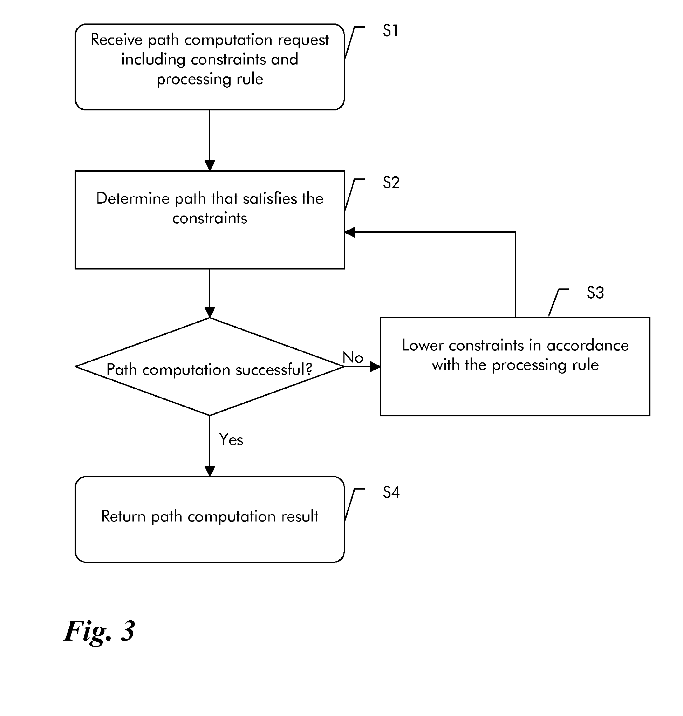

Path computation is shown in a flow chart of figure 3. In a step S1, PCE1 receives from PCC1 a path computation request REQ, which contains several constraints and at least one processing rule. In the preferred embodiment, this rule defines an order in which the constraints will be lowered when no path can be found that satisfies all constraints.

In a step S2, PCE1 computes a path that satisfies the constraints. If this fails, PCE1 lowers in step S3 the constraints in accordance with the at least one processing rule and returns to step S2 to determine a path using the new, lowered constraints. This is repeated until a satisfactory path is found. The determined path is then returned in step S4 as path computation result PCR to PCC1. Preferably, the PCR includes an indication whether the path fulfills all constraints or if not, which constraints have been lowered in accordance with the processing rule.

The path computation request REQ uses a REQUEST message as defined in the PCE communication protocol (PCEP). A PCC may insert a METRIC object in a REQUEST message sent to a PCE. This object is used to indicate the metric that must be optimized by the path computation algorithm. Currently, two metrics are defined: the IGP cost and the TE metric. The METRIC object can also be used to indicate a bound on the path cost than must not be exceeded for the path to be considered as acceptable by the PCC. Moreover, at most one METRIC object must be used to indicate the metric to optimize. However, the currently existing protocol does not enable the PCC to provide preferences for the different constraints nor to propose a multi-objective optimization.

In a preferred embodiment of the present invention, use is made of the METRIC object to communicate the at least one processing rule. For this purpose, an additional field is defined in the METRIC object. For instance, the PCC may insert in this additional field in the METRIC object associated with each constraint an information which identifies the preference order for the respective constraint when used in the computation process.

When the PCE executes the path computation, it first takes into account the full set of constraints. Whenever a feasible solution can not be achieved, the PCE starts by relaxing the constraints in the reverse order of preference until a solution is found. Then, the PCE sends to the PCC a path that satisfies the remaining subset of constraints and indicates the relaxed constraints in corresponding METRIC objects.

It should be understood that within the scope of the present invention, it is not necessary that the processing rules addresses all constraints but it would be sufficient to include in the processing rule only a subset of the constraints to be fulfilled. For instance, some constraints may not be allowed to be lowered and have hence no preference order assigned to them while other constraints are allowed to be lowered and hence have a preference order assigned.

Another aspect of the present invention relates to the objective functions that indicates the optimization criteria used for the path computation.

The PCE communication protocol also supports the a number of objective functions, in particular:
- minimum cost path with respect to a specified metric,
- least loaded path,
- maximum available bandwidth path,
- minimum aggregate bandwidth consumption on all links,
- maximum residual bandwidth on the most loaded link, and
- minimum cumulative cost of a set of diverse paths.

According to the present invention, a PCC may request a multi-objective path computation. For this purpose, the PCC inserts a set of METRIC objects corresponding to the different objective functions in the path computation request as well as a processing rule for the different objective functions. This processing rule may consist of, but not restricted to:
- a lexicographical order for the objective functions: objective functions are considered one after the other according to the order defined by the PCC, thus filtering the solution space,
- a simultaneous consideration of all objective functions: however, this case can lead to many feasible solutions (called non-dominant solutions in the optimization field),
- a defined mathematical formulae that combines the different objectives: this can be simple a weighted sum, with the weights provided in the PCE computation request.

In the exemplary embodiment of figures 1 and 2 , a network architecture with only a single PCEs is shown. It will be appreciated by those skilled in the art that the present invention is by no means limited to such an architecture. Various other PCE architectures can be devised, as explained in detail in Section 5 of RFC 4655.

While for the sake of simplicity only node N 1 is shown in figures 1 and 2 with a PCC function, this is not necessarily the case, and the present invention also encompasses other architectures where multiple or all network elements have a PCC function.

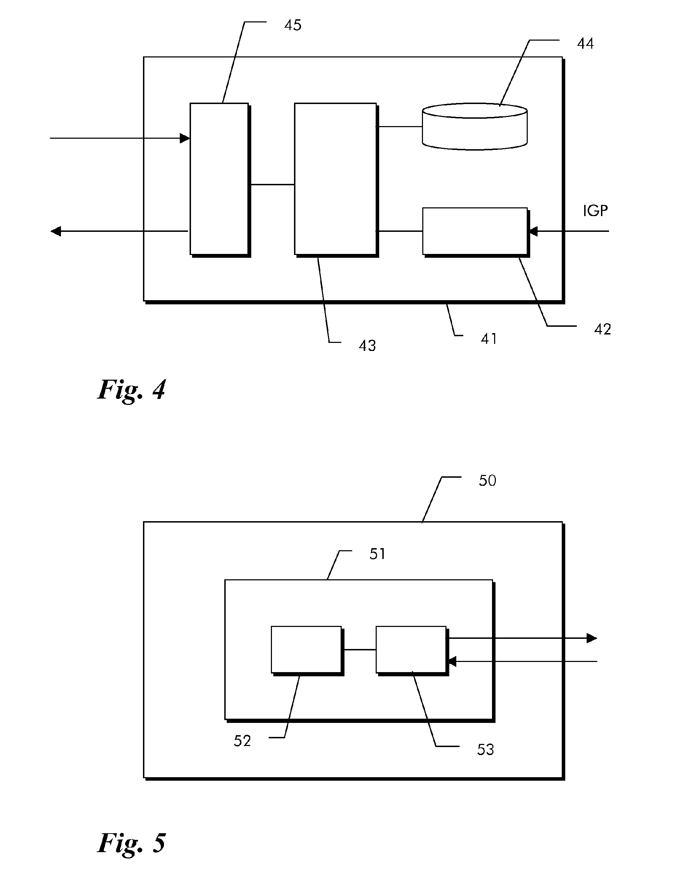

Figure 4 shows a detailed schematic diagram of a Path Computing Element (PCE) in accordance with the present invention and comprised in the data network of figure 1. PCE 41 has a control plane signaling engine 42 for receiving link state information from other entities in the network via control plane messages using an IGP such as OSPF-TE. PCE 41 stores the link state information in a Traffic Engineering Database (TED) 44. Furthermore, PCE 41 comprises processing means 43 for computing network paths based on the link state information stored in the TED 44. An interface 45 serves for the communication with a PCC via PCEP.

Path computation requests are received at interface 45 and transferred to processor 43, which computes a path corresponding to the request. The result is transferred back by interface 45 to the PCC.

Fig. 5 shows a schematic block diagram of a network element in accordance with the present invention. As already mentioned above, network element N 1, here generally depicted as network element 50, comprise a signaling engine 51 including first means 52 and second means 53. The first means 52 is devised for generating messages to inform other network elements in data network NET (figure 1) in case of a particular link reaching a respective predefined filling capacity or in case of a detected link failure. As will be appreciated by those skilled in the art, the above-mentioned functionality of said first means 52 corresponds to a functionality of standard Resource reSerVation Protocol-Traffic Engineering (RSVP-TE), which is one of the most important signaling protocols in the internet protocol suite.

As is generally known to those skilled in the art, RSVP includes sending a special message from a sender in a data network to a receiver, which message is called an RSVP Path Message. This type of message is employed for detecting a possible path from the sender to the receiver. Passed routers are logged and notified to the receiver. Along the path, the receiver sends a further message called RSVP Reservation Message. Routers along the path reserve resources according to the specification comprised in the RSVP Reservation Message or send back an error message. If the RSVP Reservation Message reaches the sender, the latter may rely on the reservations and establish the LSP.

The second means 53 is a PCEP interface, which serves for communication the with one or more PCEs. When a new path has to be established, network element 50 sends at PCEP interface 53 a path computation request to an associated PCE. When the PCE has computed a path, a proposal for the path will be received at interface 53.

As will be appreciated those skilled in the art, the present invention is not necessarily limited to the use of the OSPF routing protocol: any other future standard protocol which is able to gather network information for the PCEs can be employed instead. Furthermore, the present invention is not limited to the use of existing RSVP messages for notifying the PCEs. As an alternative, Path Computation Element (PCE) Communication Protocol (PCEP) could be employed.

## Claims

1. A method of computing a path in a network, comprising the steps of:
- providing by a Path Computation Client (PCC1) a request (REQ) that specifies the end points (N1, N2) of the path to be established, a set of constraints to satisfy, and at least one processing rule for at least part of said constraints,
- at a Path Computing Element (PCE1), processing said request (REQ) to determine a path (P) that satisfies said constraints using said processing rule.

2. The method according to claim 1, wherein said rules includes a preference order for said constraints, and wherein, if no solution can be found that satisfies all constraints, the Path Computing Element (PCE1) relaxes the constraints in the reverse order of preference to find a most satisfactory path (P).

3. The method according to claim 1, wherein said rules are sent as part of a METRIC object of the Path Computing Element Communication Protocol.

4. The method according to claim 3, wherein said a separate METRIC object is sent for each of said constraints and wherein at least some of these METRIC objects comprises a field indicating an order of preference of the corresponding constraint.

5. The method according to claim 1, wherein said Path Computing Request contains at least one objective function indicating an optimization criteria used for the path computation.

6. The method according to claim 5, wherein said Path Computing Request contains more than one objective functions and wherein said rules contain a processing rule for the different objective functions.

7. The method according to claim 6, wherein said rule comprises on of:
- a lexicographical order for the objective functions,
- a simultaneous consideration of all objective functions, and
- a formulae combining the different objective function, preferably a weighted sum, with the weights provided in said request (REQ).

8. A Path Computing Element (PCE1) for computing a path in a network upon request from a Path Computing Client (PCC1), comprising:
- interface means for receiving a request (REQ) that specifies the end points (N1, N2) of the path to be established, a set of constraints to satisfy, and at least one processing rule for at least part of said constraints,
- processing means for processing said request (REQ) to determine a path (P) that satisfies said constraints using said processing rule.
